# EUROPÄISCHE PATENTSCHRIFT

(11) **EP 3 211 271 B1**
(45) Veröffentlichungstag und Bekanntmachung des Hinweises auf die Patenterteilung: **03.04.2024**
(21) Anmeldenummer: 17157325.6
(22) Anmeldetag: 22.02.2017
(51) Int. Cl.: F16H 25/20, F16H 35/10, E05F 15/611, F16H 25/04, E05F 15/622

(54) **STELLANORDNUNG UND KLAPPENSTEUERVORRICHTUNG MIT EINER STELLANORDNUNG**
ACTUATING ARRANGEMENT AND FLAP CONTROL SYSTEM COMPRISING THE SAME
DISPOSITIF DE RÉGLAGE ET SYSTÊME DE COMMANDE D'OUVRANTS COMPRENANT LE MÊME

(30) Priorität: 29.02.2016 DE 102016203265
(43) Veröffentlichungstag der Anmeldung: 30.08.2017
(73) Patentinhaber: Stabilus GmbH, 56070 Koblenz (DE)
(72) Erfinder: Müller, Thomas, 56244 Leuterod (DE); Hillen, Jörg, 56283 Nörtershausen (DE); Lüttchens, Thordes, 56753 Pilig (DE); Wieland, Mathias, 56070 Koblenz (DE); Schuth, Thomas, 56321 Brey (DE)
(74) Vertreter: Weickmann & Weickmann PartmbB

(56) Entgegenhaltungen:
- WO-A2-2014/111065
- DE-A1- 4 219 660
- DE-A1-102007 048 928
- DE-A1-102008 005 229
- DE-A1-102014 100 125
- FR-A1- 2 992 497

## Beschreibung

Die vorliegende Erfindung betrifft eine Stellanordnung gemäß dem Oberbegriff des Anspruchs 1.

Stellanordnungen der eingangs genannten Art sind im Stand der Technik als elektromechanische Stellglieder bekannt und verwenden zumeist ein Planetenradgetriebe, um die relativ schnelle Drehung einer Ausgangswelle eines Elektromotors in eine langsamere Drehung eines Ausgangselements des Stellglieds umzusetzen. Planetenradgetriebe sind jedoch konstruktionsbedingt relativ teuer und wartungsintensiv, da sie eine Mehrzahl von auf unterschiedlichen Achsen beweglichen Zahnrädern erfordern. Darüber hinaus ist das Übertragungsverhältnis (Untersetzungsverhältnis oder Übersetzungsverhältnis) von Planetenradgetrieben abhängig vom zur Verfügung stehenden Bauraum begrenzt. Bekannt sind ferner Stellanordnungen, die ein Schneckenradgetriebe umfassen, um ein relativ hohes Untersetzungsverhältnis zu erreichen. Schneckenradgetriebe erfordern jedoch konstruktionsbedingt die Lagerung von zwei Achsen, die in einem Winkel zueinander angeordnet sind, sodass sich auch hier ein erhöhter Konstruktionsaufwand und erhöhter Bauraumbedarf ergibt.

Das gattungsbildende Dokument DE 42 19 660 A1 offenbart ein Verfahren und eine Vorrichtung eines mechanisch angetriebenen Schwenkzylinders, welcher Steilgewindepaare und eine oder mehrere Untersetzungen umfasst.

Aus der FR 2 992 497 A1 ist eine Stellanordnung mit einem rotierenden Eingangselement, einem rotierenden Ausgangselement und einem Getriebeabschnitt zur Umformung eines ersten Drehmoments in ein zweites Drehmoment bekannt.

Ferner sei auf die Dokumente DE 10 2007 048928 A1, DE 10 2014 100125 A1, WO 2014/111065 A2 und DE 10 2008 005229 verwiesen.

Aufgabe der vorliegenden Erfindung ist es, eine Stellanordnung der eingangs genannten Art bereitzustellen, welche eine Drehmomentumformung mit relativ hohem Übertragungsverhältnis ermöglicht und gleichzeitig geringen Bauraum beansprucht und mit niedrigem Konstruktionsaufwand herstellbar ist.

Ferner ist es Aufgabe der vorliegenden Erfindung eine Klappensteuerung bereitzustellen, mit welcher die Bewegung einer Klappe relativ zu einem Basisabschnitt steuerbar ist, wobei die Klappensteuervorrichtung kostengünstig und kompakt sein soll.

Nach einem ersten Aspekt wird die oben genannte Erfindungsaufgabe gelöst durch eine Stellanordnung gemäß Anspruch 1.

Nach einem wichtigen Merkmal der vorliegenden Erfindung ist somit eine axial bewegliche Übertragungseinrichtung vorgesehen, welche durch die Drehung des Eingangselements in axiale Bewegung versetzt wird, und welche ihrerseits diese axiale Bewegung wiederum in eine Drehung des Ausgangselements umsetzt. Die hierfür verwendeten ersten und zweiten Gewindeabschnitte der Übertragungseinrichtung weisen voneinander unterschiedliche Gewindesteigungen auf, durch welche eine Umformung des Drehmoments, d. h. eine Übersetzung oder eine Untersetzung von der Drehung des Eingangselements in die Drehung des Ausgangselements erreicht wird. Die erfindungsgemäße Anordnung erlaubt insbesondere eine koaxiale Anordnung der Drehachsen von Eingangselement und Ausgangselement zur Vereinfachung der Lageranordnungen für die beteiligten Elemente. Ferner ermöglicht die Wahl unterschiedlicher Gewindesteigungen die Realisierung der erfindungsgemäßen Stellanordnung in einer einfachen Konstruktion und mit kompakter Bauweise. Je nach Ausbildung der Gewindeabschnitte und der Gewindesteigungen lassen sich auch sehr hohe Übertragungsverhältnisse in einfacher Weise realisieren.

Gemäß einer bevorzugten Ausführungsform ist vorgesehen, dass die Übertragungseinrichtung eine Spindelmutter umfasst und dass der erste Gewindeabschnitt und der zweite Gewindeabschnitt an unterschiedlichen Abschnitten der Spindelmutter ausgebildet sind, wobei vorzugsweise einer der beiden Gewindeabschnitte ein Innengewinde der Spindelmutter bildet und der andere Gewindeabschnitt ein Außengewinde der Spindelmutter bildet. Diese Ausführungsform ermöglicht einen besonders einfachen Aufbau, da insbesondere die beiden Gewindeabschnitte an ein und dem selben Bauteil, einer Spindelmutter, ausgebildet werden können. Insbesondere kann ein materialeinheitliches bzw. integrales Element, z. B. die Spindelmutter, als Übertragungseinrichtung vorgesehen sein, wodurch die Herstellungskosten weiter reduziert werden und eine besonders kompakte Bauweise realisiert werden kann.

Die Stellanordnung kann eine Hauptachse aufweisen, um welche das Eingangselement sowie das Ausgangselement rotieren und entlang welcher auch die Übertragungseinrichtung axial verschiebbar ist. Diese Variante erlaubt nicht nur die Herstellung einer besonders einfachen und kostengünstigen Stellanordnung sondern kann ferner in Form einer länglichen, insbesondere zylinderförmigen Stellanordnung genutzt werden, sodass ihre Bauform insbesondere für den Einsatz in einer Klappensteuervorrichtung zur Steuerung der Bewegung einer Klappe eine günstige Form aufweist.

Vorzugsweise steht das Eingangselement mit dem ersten Gewindeabschnitt der Übertragungseinrichtung in Gewindeeingriff oder/und das Ausgangselement steht mit dem zweiten Gewindeabschnitt der Übertragungseinrichtung in Gewindeeingriff, sodass eine direkte Übertragung zwischen den jeweiligen Elementen Reibungsverluste reduziert, und zu einer Verringerung der notwendigen Bauteile beiträgt. Insbesondere kann der eigentliche Getriebeabschnitt dann mit im Wesentlichen nur drei beweglichen Elementen, dem Eingangselement, der Übertragungseinrichtung und dem Ausgangselement, realisiert werden.

In einer weiteren Ausführungsform der vorliegenden Erfindung kann der zweite Gewindeabschnitt mit einem gehäusefesten Gewindeelement in Eingriff stehen. In weiteren Ausführungsformen der Erfindung kann die Übetragungseinrichtung mit dem Eingangselement oder mit einem gehäusefesten Abschnitt axial verschiebbar jedoch drehfest verbunden sein. Solche Maßnahmen erlauben eine Entkopplung der Axialbewegung der Übertragungseinrichtung von dem Eingangselement oder/und dem Ausgangselement oder/und dem Gehäuse.

Die Stellanordnung kann ferner eine Motoranordnung aufweisen, durch welche das Eingangselement drehend angetrieben ist. Ist die Motoranordnung Teil der Stellanordnung, so bilden die mechanischen bzw. beweglichen Komponenten eine leicht zu montierende Baueinheit, die insbesondere nur noch elektrisch zu kontaktieren ist. Eine Positionierung und drehfeste Montage zwischen Motoranordnung und Eingangselement entfällt. Alternativ kann das Eingangselement der Stellanordnung dafür eingerichtet sein, mit einer Ausgangswelle einer Motoranordnung drehfest gekoppelt zu werden, sodass die Motoranordnung dann nicht Teil der Stellanordnung ist.

Umfasst die Stellanordnung die Motoranordnung in einer Baueinheit, so weist die Motoranordnung vorzugsweise einen Motor sowie ein Getriebe auf, wobei das Ausgangselement des Motors in das Getriebe eingegeben wird und ein Ausgangsdrehmoment des Getriebes das Eingangselement antreibt. Somit kann eine zusätzliche Umformungsstufe für das Drehmoment des Motors bereitgestellt werden, um beispielsweise ein besonders hohes Übertragungsverhältnis der gesamten Stellanordnung zu erreichen. Hierbei wird insbesondere an ein Planetenradgetriebe gedacht, welches dann insbesondere axial zwischen dem Motor und dem rotierenden Eingangselement angeordnet ist.

In einer weiteren bevorzugten Ausführungsform der Erfindung umfasst die Stellanordnung ferner einen Überlaststeuereinrichtung, welche dafür eingerichtet ist, in einem Überlastfall, in welchem an dem Ausgangselement ein Drehmoment eingegeben wird, welches ein vorbestimmtes Überlastdrehmoment der Stellanordnung überschreitet, eine Drehkopplung zwischen Ausgangselement und Motoranordnung zu unterbrechen oder zumindest über einen bestimmten Drehwinkelbereich hinweg zu reduzieren. Die Überlaststeuerung verhindert insbesondere eine Beschädigung der Stellanordnung und insbesondere einer Motoranordnung im Falle der Wirkung eines unerwartenden oder unbeabsichtigten großen Drehmoments am Ausgangselement. Ist die Stellanordnung beispielsweise Teil einer Klappensteuervorrichtung zur Steuerung und Bewegung einer Klappe, so kann die Überlaststeuereinrichtung eine Beschädigung der Stellanordnung bzw. der Motoranordnung verhindern, wenn eine größere externe Kraft, insbesondere durch unsachgemäße manuelle Betätigung der Klappe, auf die Klappe und damit ein überhöhtes Drehmoment auf das Ausgangselement einwirkt. Die Überlaststeuereinrichtung kann drehmomentübertragend zwischen dem Eingangselement und der Motoranordnung angeordnet sein bzw. vor dem Eingangselement angeordnet sein, sodass eine Motoranordnung an die Überlaststeuereinrichtung anzuschließen ist. Auf diese Weise wird die Motoranordnung effektiv vor Überlastung geschützt, ohne das hierzu größere konstruktive Änderungen des Getriebeabschnitts erforderlich wären.

Die Anordnung der Überlaststeuereinrichtung zwischen Eingangselement und Motoranordnung erfordert jedoch eine relativ hohe Toleranz der Überlaststeuereinrichtung, da dann zwischen dem Angriffspunkt des externen Drehmoments, nämlich dem Ausgangselement, und der Überlaststeuereinrichtung der Getriebeabschnitt angeordnet ist und die Überlaststeuereinrichtung somit bei relativ kleinen Drehmomenten bereits wirksam werden muss. Dies gilt auch für eine Ausführungsform, in welcher die Überlaststeuereinrichtung zwischen einem Motor der Motoranordnung und einem nachfolgenden ersten Getriebe der Motoranordnung, beispielsweise einem Planetenradgetriebe angeordnet ist. In einer alternativen Variante kann die Überlaststeuereinrichtung zwischen dem Ausgangselement und dem Eingangselement angeordnet sein, um den vorgenannten Nachteil zu vermeiden. Mit anderen Worten wirkt sich die Einbauposition der Überlaststeuereinrichtung entlang der Kraftübertragungskette Motor, erstes Planetenradgetriebe (falls vorhanden), Eingangselement, Getriebeabschnitt, Ausgangselement, auf das ausgangsseitige Überlastmoment der Stellanordnung in unterschiedlichen Betriebszuständen wie folgt aus: Die Differenz zwischen dem ausgangsseitigen Überlastmoment bei Motorantrieb und dem Überlastmoment bei Krafteinwirkung am Ausgangselement nimmt mit zunehmendem Abstand der Überlastkupplung vom Ausgangselement zu.

In einer Variante der Erfindung, in welcher die Überlaststeuereinrichtung in der oben beschriebenen Kraftübertragungskette relativ weit zum Ausgangselement hin verlagert ist, kann vorgesehen sein, dass der zweite Gewindeabschnitt mit einem Gewindeelement in Eingriff steht, wobei das Gewindeelement in einem Normalbetrieb, in welchem ein zwischen Ausgangselement und Motoranordnung auftretendes Drehmoment kleiner als ein vorbestimmtes Überlastdrehmoment ist, durch die Überlaststeuereinrichtung drehfest in Bezug auf ein Gehäuse der Stellanordnung gehalten ist, und wobei das Gewindeelement in einem Überlastfall, in welchem das zwischen Ausgangselement und Motoranordnung auftretende Drehmoment gleich oder größer ist als das vorbestimmte Überlastdrehmoment, durch die Überlaststeuereinrichtung zur Drehung relativ zum Gehäuse freigegeben wird. Da der zweite Gewindeabschnitt im Drehmomentübertragungsweg des Getriebeabschnitts auf Seiten des Ausgangselements angeordnet ist, wird durch diese Maßnahme die Überlaststeuereinrichtung in Richtung des Ausgangselements verlagert, d.h. dahin, wo das übermäßige Drehmoment tatsächlich in die Stellanordnung eingegeben wird.

In einer weiteren Ausführungsform der vorliegenden Erfindung kann vorgesehen sein, dass die Überlaststeuereinrichtung ein axial bewegliches Kupplungselement aufweist, welches in einem Überlastfall, in welchem ein zwischen Ausgangselement und Motoranordnung auftretendes Drehmoment gleich oder größer ist als das vorbestimmte Überlastdrehmoment, gegen eine Rückstellkraft in axialer Richtung verschoben wird, um eine Drehmomentübertragung über das Kupplungselement zu unterbrechen. Mit einem derartigen beweglichen Kupplungselement lässt sich eine Unterbrechung einer Drehmomentübertragung im Überlastfall mit einfachen mechanischen Mitteln erreichen.

Gemäß einem zweiten Aspekt der vorliegenden Erfindung wird die oben genannte Erfindungsaufgabe gelöst durch eine Klappensteuervorrichtung zur Steuerung der Bewegung einer Klappe relativ zu einem Basisabschnitt in einem vorbestimmten Schwenkwinkel, vorzugsweise einem Winkel <= 180 Grad, wobei die Klappensteuervorrichtung eine Klappenhalterung, an welcher eine Klappe vorgesehen oder montierbar ist, und eine Stellanordnung nach dem ersten Aspekt der Erfindung umfasst, wobei die Klappenhalterung an dem Ausgangselement angeordnet ist, wobei die Stellanordnung ein Gehäuse aufweist, in welchem die Übertragungseinrichtung, das Eingangselement und eine Motoranordnung zum drehenden Antrieb des Eingangselements untergebracht sind, und wobei das Gehäuse Halterungsmittel zur betriebsfesten Halterung des Gehäuses an dem Basisabschnitt aufweist.

Gemäß dem zweiten Aspekt der Erfindung werden die oben genannten Vorteile einer erfindungsgemäßen Stellanordnung des ersten Aspekts der Erfindung in der Anwendung als Klappensteuervorrichtung ausgenutzt. Dementsprechend weist die Klappensteuervorrichtung des zweiten Aspekts der Erfindung eine kompakte Bauform und einen einfachen Aufbau auf und ermöglicht ein relativ hohes Übertragungsverhältnis zur kontrollierten Schwenkbewegung der Klappe mit gewünschter Geschwindigkeit. Das Gehäuse kann gleichzeitig sowohl als Gehäuse und festes Bauteil der Stellanordnung und ferner auch zur mechanischen Abstützung zwischen Basisabschnitt und Klappe, d. h. zum Tragen der Klappe verwendet werden.

In einer bevorzugten Ausführungsform der Erfindung des zweiten Aspekts umfasst die Klappensteuervorrichtung eine Stellanordnung mit axial beweglichem Kupplungselement, wie es vorstehend in Bezug auf eine Variante des ersten Aspekts der Erfindung beschrieben wurde. In einer solchen Vorrichtung kann dann vorteilhaft der Schwenkwinkel der Klappe auf Werte innerhalb eines vorbestimmten Betriebswinkels beschränkt sein, wobei das Kupplungselement eine Verzahnung aufweist, welche in eine zugeordnete Gegenverzahnung der Stellanordnung eingreifen kann, um eine Relativdrehung zwischen Kupplungselement und Gegenverzahnung zu blockieren, wobei in Drehrichtung des Kupplungselements zwei benachbarte Eingriffsstellungen zwischen Verzahnung und Gegenverzahnung einen Winkel einschließen, der größer ist als der Betriebswinkel. Eine solche Klappensteuervorrichtung hat den Vorteil, dass im Überlastfall das Kupplungselement zwar ausrückt und der Motor ohne Mitnahme der Klappe weiter dreht, dass dann jedoch beim Zurücksetzen der Klappenbetätigungsvorrichtung, also beispielsweise beim manuellen Weiterbewegen der Klappe nach Beseitigung der Blockierung, das Kupplungselement dann in Bezug auf die übrigen beweglichen Elemente des Getriebeabschnitts, insbesondere die Übertragungseinrichtung und das Ausgangselement, wieder in die gleiche Relativposition zurückgebracht wird, da innerhalb des Betriebswinkels der Klappe nur eine einzige solche Relativposition für den Normalbetrieb möglich ist.

Die vorliegende Erfindung wird nachfolgend anhand bevorzugter Ausführungsbeispiele unter Bezugnahme auf die beigefügten Zeichnungen näher erläutert. Es zeigen:
- Figur 1:: ein Schnittansicht einer Stellanordnung nach einem ersten nicht erfindungsgemäßen Ausführungsbeispiel der Erfindung in einer Schnittebene entlang einer Hauptachse der Stellanordnung,
- Figur 2:: eine perspektivische, teilweise geschnittene Darstellung der Stellanordnung des ersten Ausführungsbeispiels,
- Figur 3:: eine Schnittansicht einer Stellanordnung gemäß einem zweiten, nicht erfindungsgemäßen Ausführungsbeispiel der Erfindung in einer Schnittebene entlang einer Hauptachse der Stellanordnung,
- Figur 4:: eine Schnittansicht einer Stellanordnung gemäß einem dritten nicht erfindungsgemäßen Ausführungsbeispiel der vorliegenden Erfindung in einer Schnittebene entlang einer Hauptachse der Stellanordnung und
- Figur 5:: eine geschnittene perspektivische Ansicht einer Stellanordnung gemäß einem vierten Ausführungsbeispiel der Erfindung mit einer Schnittebene entlang einer Hauptachse der Stellanordnung,
- Figur 6:: eine Ansicht gemäß Figur 5, jedoch ohne Gehäuse,
- Figur 7:: eine perspektivische Ansicht einer Stellanordnung gemäß einem fünften Ausführungsbeispiel der vorliegenden Erfindung und
- Figur 8:: eine perspektivische Ansicht eines Kupplungsrads der Stellanordnung des fünften Ausführungsbeispiels.

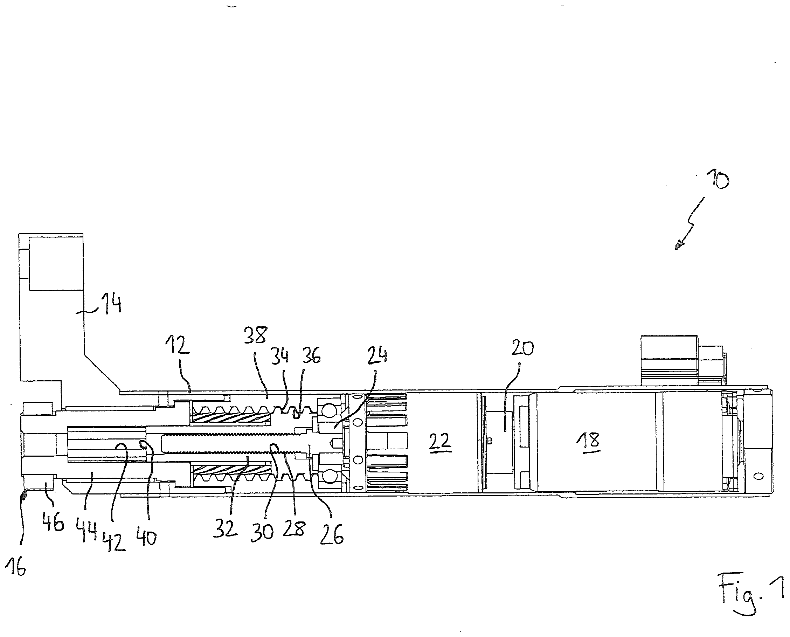

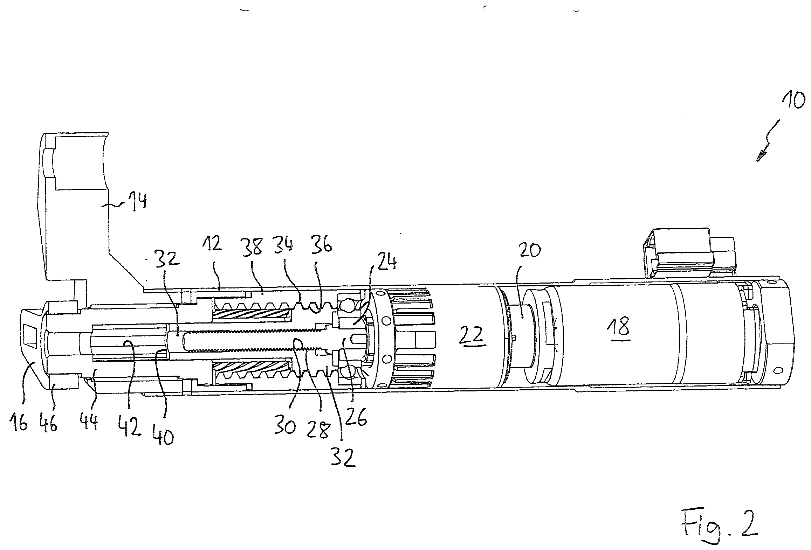

Eine in Figuren 1 und 2 allgemein mit 10 bezeichnete Stellanordnung gemäß einem ersten nicht erfindungsgemäßen Ausführungsbeispiel der Erfindung umfasst ein Gehäuse 12 mit einem Befestigungsabschnitt 14 zur Befestigung der Stellanordnung 10 an einem externen Bauteil (nicht dargestellt), beispielsweise einem Basisabschnitt oder Rahmen einer Klappenanordnung. Ein von der Stellanordnung 10 erzeugtes Drehmoment wird an einem Abtriebselement 16 ausgegeben, welches im Falle der Anwendung in einer Klappensteuervorrichtung an einer Klappe befestigt sein kann oder durch eine Klappe gebildet sein kann, sodass die Stellanordnung 10 die Klappe relativ zum Basisabschnitt verschwenken kann. Das Abtriebselement 16 kann als Abtriebshebel ausgebildet sein.

Antriebsenergie der Stellanordnung kann durch einen Motor 18 bereitgestellt werden, welcher im Ausführungsbeispiel ein im Gehäuse 12 ausgenommener Elektromotor ist. Eine Ausgangswelle 20 des Motors 18 wird vorzugsweise mit einem Getriebe 22 gekoppelt, um eine erste Drehmomentumformung zu erreichen, insbesondere die relativ hohe Ausgangsdrehzahl des Motors 18 in eine niedrigere Drehzahl einer Getriebeausgangswelle 24 umzusetzen. Das Getriebe 22 ist vorzugsweise ein Planetenradgetriebe und erlaubt auf diese Weise eine koaxiale Weitergabe des Drehmoments von der Motorausgangswelle 22 zur Getriebeausgangswelle 24 mit relativ hohem Umformungsverhältnis.

Der Motor 18 und das Getriebe 22 bilden eine Motoranordnung im Sinne der vorliegenden Erfindung, welche ein erstes Drehmoment an einem Eingangselement 26 bereitstellt. Die Motoranordnung kann alternativ nur durch einen Motor, d. h. ohne Getriebe, gebildet sein, oder kann eine andere Getriebeform anstelle des Planetenradgetriebes 22 verwenden.

Im ersten Ausführungsbeispiel ist das Eingangselement 26 mit einem Außengewinde 28 versehen und kann insbesondere als Spindel ausgebildet sein, die axial fest und um die Hauptachse A drehbar bezüglich des Gehäuses 12 gelagert ist. Das Außengewinde 28 der Spindel 26 ist im Eingriff mit einem Innengewinde 30 einer Übertragungseinrichtung 32. Die Übertragungseinrichtung 32 weist ferner ein Außengewinde 34 auf, welches wiederum mit einem Innengewinde 36 einer gehäusefesten Gewindehülse 38 im Eingriff steht. Die Gewindehülse 38 ist im Gehäuse 12 befestigt oder wird durch das Gehäuse 12 selbst gebildet.

Das Innengewinde 30 der Übertragungseinrichtung 32 weist eine Gewindesteigung auf, welche verschieden ist, im Ausführungsbeispiel insbesondere kleiner ist, als eine Gewindesteigung des Außengewindes 34 der Übertragungseinrichtung 32. Dementsprechend ist auch die Gewindesteigung des Außengewindes 28 des Eingangselements 26 verschieden, insbesondere kleiner, als das Innengewinde 36 der Gewindehülse 38. Die Übertragungseinrichtung 32 ist zwischen Eingangselement 26 und Gewindehülse 38 drehbar sowie axial beweglich geführt. Im Ergebnis führt eine Drehbewegung des Eingangselements 26, angetrieben durch die Motoranordnung 18, 22 zu einer axialen Bewegung der Übertragungseinrichtung 32, wobei die Zwangsführung zwischen Übertragungseinrichtung 32 und Gewindehülse 38 dieser axialen Bewegung eine Rotationsbewegung entsprechend der Gewindesteigung des Innengewindes 36 der Gewindehülse 38 überlagert. Da die Steigung dieses Innengewindes 36 deutlich größer ist als die Steigung des Außengewindes 28 des Eingangselements 26, dreht sich die Übertragungseinrichtung 32 mit einer Drehzahl, die wesentlich kleiner ist als die Drehzahl des Eingangselements 26.

Die Übertragungseinrichtung 32 ist mit dem Abtriebselement 16 drehmomentübertragend gekoppelt, um das Abtriebselement 16 drehend anzutreiben. Vorzugsweise ist die Kopplung zwischen Übetragungseinrichtung 32 und Abtriebselement 16 jedoch so gestaltet, dass die axiale Bewegungskomponente der Übertragungseinrichtung 32 nicht auf das Abtriebselement 16 übertragen wird, um am Abtriebselement 16 eine reine Rotationsbewegung bereitzustellen, wie sie beispielsweise zur Ansteuerung einer Klappe gewünscht ist. Die Übertragungseinrichtung 32 kann somit drehmomentübertragend jedoch axial verschiebbar mit dem Abtriebselement 16 gekoppelt sein. Hierzu kann eine Axialverzahnung 40 an einem Außenumfang der Übertragungseinrichtung 32 mit einer passenden Axialverzahnung 42 an einem Innenumfang des Abtriebselements 16 im Eingriff stehen, sodass sich die Übertragungseinrichtung in axialer Richtung in das Abtriebselement 16 hinein verschieben kann oder sich aus diesem herausziehen kann, sich jedoch relativ zum Abtriebselement 16 nicht verdrehen kann. Im illustrierten Ausführungsbeispiel kann das Abtriebselement 16 eine Hohlwelle 44 umfassen, in welcher die Axialverzahnung 42 ausgebildet ist, und kann ferner einen Abtriebshebel 46 umfassen, der an der Hohlwelle 44 befestigt ist.

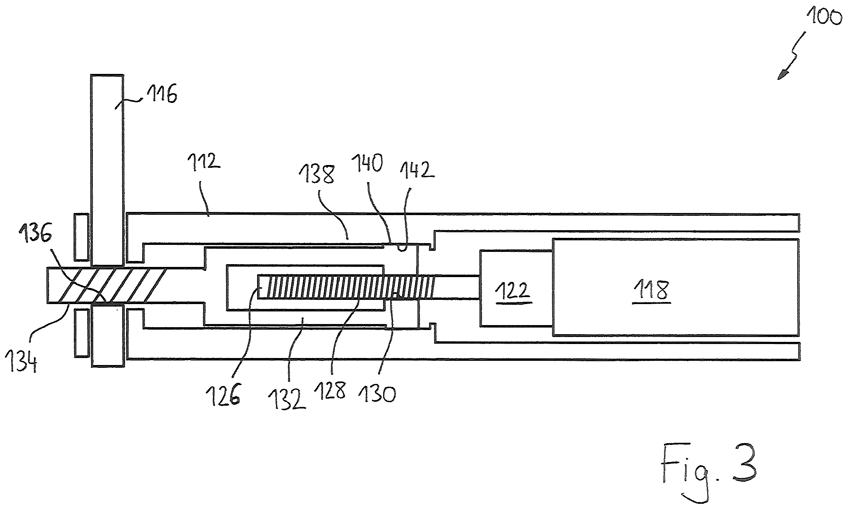

Die in dieser Weise konstruierte Stellanordnung 10 erlaubt mit einer einfachen und kompakten Struktur eine relativ hohe Drehzahluntersetzung, d. h. einen Getriebeabschnitt mit relativ hohem Übertragungsverhältnis. Ferner ist in Figur 1 zu erkennen, dass sich das Innengewinde 30 und das Außengewinde 34 der Übertragungseinrichtung 32 in axialer Richtung überlappen können oder/und dass sich das Innengewinde 36 der Gewindehülse 38 und das Außengewinde 28 des Eingangselements 26 axial miteinander überlappen können, sodass entlang der Hauptachse A der Stellanordnung 10 (Drehachse des Eingangselements 26) die Gesamtlänge der Stellanordnung 10 reduziert werden kann. In Figur 1 ist ferner illustriert, dass das Übertragungselement 32 aus einer einteiligen Spindelmutter gebildet sein kann und somit besonders einfach und kostengünstig herstellbar ist. Ferner sind vorzugsweise die Drehachsen im Wesentlicher aller drehbaren Teile der Stellanordnung 10 parallel zueinander und zumeist auch koaxial orientiert. Insbesondere liegen die Drehachsen von Motorausgangswelle 20, Getriebeausgangswelle 24, Eingangselement 26, Übertragungseinrichtung 32 und Abtriebselement 16 alle auf der Hauptachse A der Stellanordnung 10, wodurch eine stabile und kompakte Anordnung sowie die Unterbringung in einem im Wesentlichen zylindrischen Gehäuse Unter Bezugnahme auf Figur 3 wird nachfolgend ein zweites, nicht erfindungsgemäßes Ausführungsbeispiel der vorliegenden Erfindung beschrieben. Dabei wird im Folgenden nur auf die Unterschiede gegenüber dem ersten Ausführungsbeispiel näher eingegangen. Betreffend die Konstruktion und Funktionsweise aller übrigen Komponenten der Stellanordnung wird ausdrücklich auf die vorstehende Beschreibung des ersten Ausführungsbeispiels verwiesen.

Eine Stellanordnung 100 des zweiten Ausführungsbeispiels umfasst ein Gehäuse, in welchem ein Motor 118 und ein Getriebe 122 untergebracht sind. Die durch Motor 118 und Getriebe 122 gebildete Motoranordnung stellt ein Drehmoment für den Antrieb eines Eingangselements 126 bereit, welches wiederum als Gewindespindel mit einem Außengewinde 128 ausgebildet sein kann. Das Außengewinde 128 des Eingangselements 126 steht im Gewindeeingriff mit einem Innengewinde 130 einer Übertragungseinrichtung 132. Die Übertragungseinrichtung 132 ist in Bezug auf das Gehäuse 112 der Stellanordnung 100 drehfest, jedoch axial verschiebbar geführt. Hierzu kann insbesondere eine Axialverzahnung 140 an einem Außenumfang der Übertragungseinrichtung 132 in einer Axialverzahnung 142 am Innenumfang einer gehäusefesten Führungshülse 138 geführt sein. Die Führungshülse 138 kann alternativ durch das Gehäuse 112 gebildet sein, wenn beispielsweise die Axialverzahnung 142 unmittelbar an einem Innenumfang des Gehäuses 112 ausgebildet ist.

Die Übertragungseinrichtung 132 weist ferner ein zweites Gewinde, insbesondere ein Außengewinde 134 auf, welches mit einem Innengewinde 136 eines Abtriebselements 116 im Eingriff ist. Das Abtriebselement 116 ist in Bezug auf das Gehäuse 112 drehbar jedoch axial unverschiebbar gehalten.

Eine Gewindesteigung des Außengewindes 134 des Übertragungselements 132 ist verschieden, insbesondere größer, als eine Gewindesteigung des Innengewindes 130 der Übertragungseinrichtung 132.

Im Betrieb der Stellanordnung 100 erzeugt die Motoranordnung 118, 122 ein erstes Drehmoment, welches an dem Eingangselement 126 eingegeben wird und das Eingangselement 126 in Drehung versetzt. Diese Drehbewegung versetzt die Übertragungseinrichtung 132 aufgrund der Axialführung 140, 142 in eine (rein) axiale Verschiebungsbewegung entlang der Drehachse A des Eingangselements 126. Die axiale Verschiebung der Übertragungseinrichtung 132 wird schließlich durch den Gewindeeingriff zwischen dem Außengewinde 134 der Übertragungseinrichtung 132 und dem Innengewinde 136 des Abtriebselements 116 in eine Drehbewegung des Abtriebselements 116 umgesetzt. Aufgrund der unterschiedlichen Gewindesteigungen zwischen dem Innengewinde 130 und dem Außengewinde 134 der Übertragungseinrichtung 132 führt dabei ein bestimmter axialer Verschiebungsweg der Übertragungseinrichtung 132 zu einem deutlich kleineren Drehwinkel des Abtriebselements 116 bzw. einer deutlich langsameren Drehung des Abtriebselements 116.

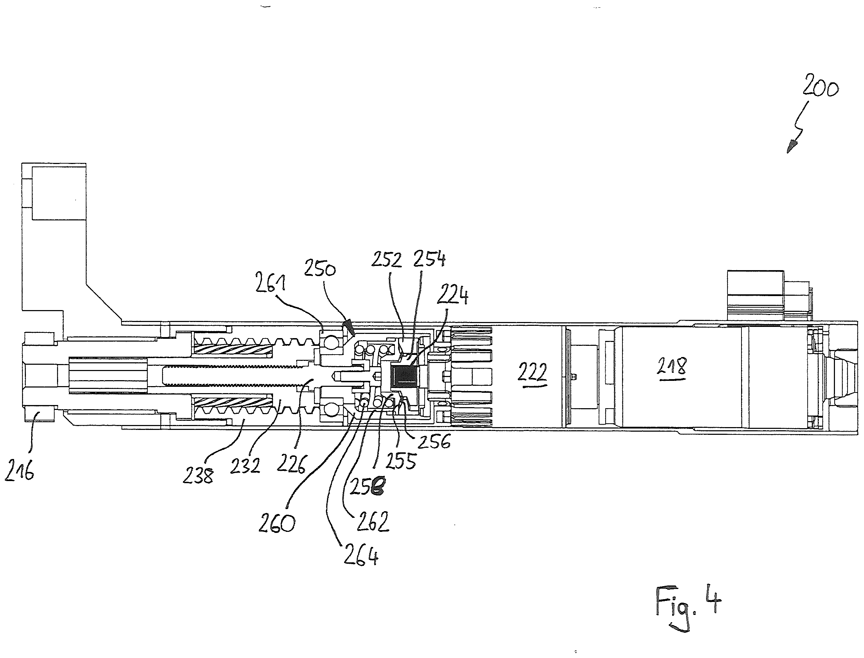

Unter Bezugnahme auf Figur 4 wird nachfolgend ein drittes nicht erfindungsgemäßes Ausführungs¬beispiel der vorliegenden Erfindung beschrieben. Das dritte Ausführungs¬beispiel basiert auf der Konstruktion des ersten Ausführungsbeispiels (Figuren 1 und 2). Im Folgenden wird nur auf die Unterschiede zum ersten Ausführungsbeispiel näher eingegangen und in Bezug auf alle nicht erneut beschriebenen Komponenten und Funktionen der Stellanordnung wird ausdrücklich auf die Beschreibung des ersten Ausführungsbeispiels verwiesen.

Eine Stellanordnung 200 des dritten Ausführungsbeispiels umfasst eine Motoranordnung mit einem Motor 218 und einem Getriebe 222 zur Bereitstellung eines ersten Drehmoments, welches einem Eingangselement 226 eingegeben wird. Ein Getriebeabschnitt zur Umformung dieses ersten Drehmoments am Eingangselement 226 in ein zweites Drehmoment an einem Abtriebselement 216 umfasst, ebenso wie im ersten Ausführungsbeispiel, das Eingangselement 226, eine Übertragungseinrichtung 232, eine Gewindehülse 238 sowie das Abtriebselement 216. Der Getriebeabschnitt zwischen Eingangselement 226 und Abtriebselement 216 kann jedoch eine andere Ausgestaltung aufweisen. Im Unterschied zum ersten Ausführungsbeispiel umfasst die Stellanordnung 200 des dritten Ausführungsbeispiels eine Überlastkupplung 250, welche zwischen einer Getriebeausgangswelle 224 der Motoranordnung 218, 222 und dem Eingangselement 226 angeordnet ist, um im Falle der Einwirkung eines ein vorbestimmtes Überlastdrehmoment überschreitenden Drehmoments zwischen Abtriebselement 216 und Motoranordnung 218, 222 den Drehmomentübertragungsweg zu unterbrechen, bzw. eine Relativdrehung zwischen Abtriebselement 216 und Getriebeausgangswelle 224 zuzulassen. Auf diese Weise wird im Falle der Einwirkung einer hohen äußeren Kraft, beispielsweise wenn eine von dem Abtriebselement 216 angesteuerte Klappe gegen einen äußeren Widerstand läuft, eine Überlastung der Motoranordnung 218, 222 verhindert.

Die Überlastkupplung 250 umfasst ein Mitnehmerrad 252, welches drehfest mit der Getriebeausgangswelle 224 verbunden ist und hierzu entweder unmittelbar auf der Getriebeausgangswelle 224 befestigt ist oder an einem Adapterrad 254 getragen ist, welches an der Getriebeausgangswelle 224 montiert ist. Das Mitnehmerrad 252 weist eine Verzahnung 255 auf, welche in axialer Richtung von einer Stirnseite des Mitnehmerrads 252 aus vorsteht. Die Verzahnung 250 des Mitnehmerrads 252 greift ein in eine korrespondierende Verzahnung 256 eines Kupplungsrads 258, welche ebenfalls in axialer Richtung vorstehend an einer dem Mitnehmerrad 252 zugewandten Stirnseite des Kupplungsrads 258 ausgebildet ist. Die Verzahnungen 255, 256 weisen Zähne bzw. Kerben mit jedenfalls einseitig schrägen oder runden Flanken auf, vorzugsweise V-förmige Zahnflanken bzw. Kerbflanken. Befinden sich die Verzahnung 255 des Mitnehmerrads 252 und die Verzahnung 256 des Kupplungsrads 258 miteinander im Eingriff, so kann durch eine relative Verdrehung zwischen Mitnehmerrad 252 und Kupplungsrad 258 eine axiale Trennung von Mitnehmerrad 252 und Kupplungsrad 258 und somit ein Lösen der Verzahnungen 255, 256 erzwungen werden, indem die besagten Schrägflächen der Verzahnungen 255, 256 aneinander abgleiten.

Die Überlastkupplung 250 umfasst ferner ein Kupplungsausgangsrad 260, welches an einem Lager 261 drehbar und axial unbeweglich im Gehäuse 212 gehalten ist. Das Kupplungsrad 258 ist an dem Kupplungsausgangsrad 260 drehfest jedoch axial verschiebbar gehalten. Insbesondere können axiale Kerbverzahnungen 262 an dem Kupplungsrad 258 sowie am Kupplungsausgangsrad 260 vorgesehen sein, welche miteinander im Eingriff sind und dafür sorgen, dass sich das Kupplungsrad 258 und das Kupplungsausgangsrad 260 relativ zueinander in axialer Richtung verschieben können, eine Relativdrehung der beiden Bauteile jedoch blockiert ist. Durch eine Feder 264, welche sich einerseits am Kupplungsausgangsrad 260 und andererseits am Kupplungsrad 258 abstützen kann, ist das Kupplungsrad 258 vorzugsweise in Richtung zu dem Mitnehmerrad 252 hin, d.h. in Richtung eines Eingriffs der Verzahnungen 255, 256 vorgespannt. Das Kupplungsausgangsrad 260 ist vorzugsweise drehfest mit dem Eingangselement 226 verbunden oder integral mit diesem ausgebildet.

Im Folgenden wird die Wirkungsweise der Überlastkupplung 250 erläutert. In einem Normalbetrieb, wenn die Motoranordnung 218, 222 zur Bewegung des Abtriebselements 216 angetrieben wird und auf Seiten des Abtriebselements 216 dieser Drehbewegung ein Widerstand entgegengesetzt wird, der kleiner ist als ein vorbestimmtes Überlastdrehmoment, so hält die Feder 264 das Kupplungsrad 258 im Eingriff mit dem Mitnehmerrad 252, so dass die Drehbewegung der Getriebeausgangswelle 224 über das Mitnehmerrad 252, das Kupplungsrad 258 und das Kupplungsausgangsrad 260 auf das Eingangselement 226 übertragen wird und nach Drehmomentumformung ein Drehantrieb des Abtriebselements 216 erfolgt. Wird das Abtriebselement 216 durch eine externe Kraft blockiert oder wirkt in anderer Weise zwischen dem Abtriebselement 216 und der Motoranordnung 218, 222 ein das vorbestimmte Überlastdrehmoment übersteigendes Drehmoment, das heißt es liegt ein Überlastfall vor, so wird dieses externe Drehmoment über das Abtriebselement 216, die Übertragungseinrichtung 232 und das Eingangselement 226 in die Überlastkupplung 250 eingegeben und auf das Kupplungsausgangsrad 260 sowie das Kupplungsrad 258 übertragen. Der Drehmomentunterschied zwischen Kupplungsrad 258 und dem mit der Motoranordnung 218, 222 verbundenen Mitnehmerrad 254 führt dann zu einem Abgleiten der Schrägflächen beziehungsweise Rundungen der Verzahnungen 255, 256 und zu einem Trennen des Eingriffs zwischen Kupplungsrad 258 und Mitnehmerrad 254 gegen die Kraft der Feder 264. Die Überlastkupplung 250 erlaubt dann eine Drehung zwischen Kupplungsrad 258 und Mitnehmerrad 252 über die Zähne der Verzahnungen 255, 256 hinweg, so dass die Drehmomentkopplung an dieser Stelle unterbrochen ist. Sobald das externe Drehmoment wegfällt, bzw. auf einen Wert unterhalb des vorbestimmten Überlastdrehmoments reduziert wird, rückt die Überlastkupplung 250 kraft der Feder 264 wider ein und die Stellanordnung 200 kann wieder im Normalbetrieb betrieben werden.

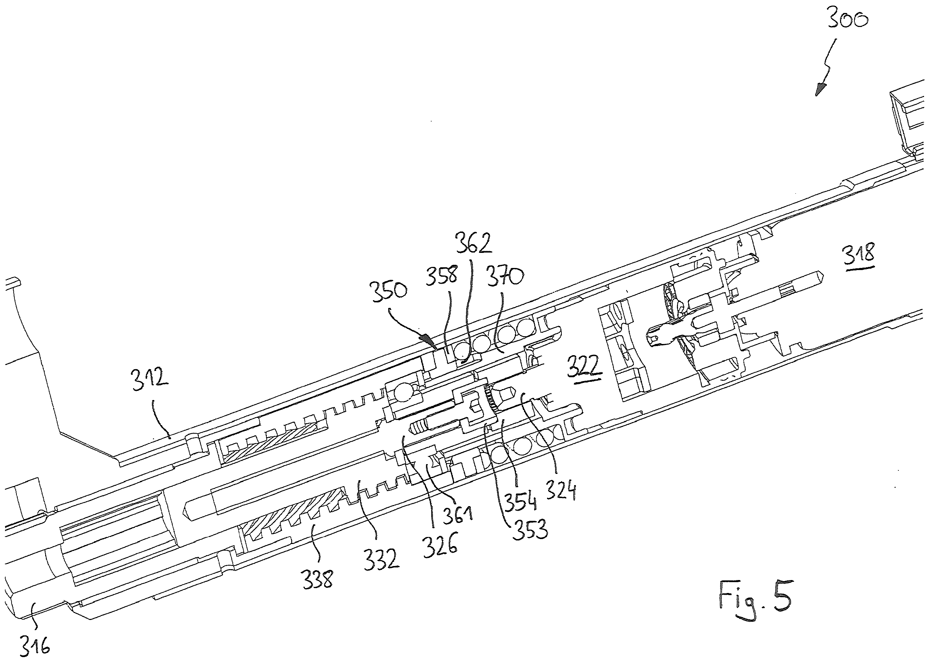

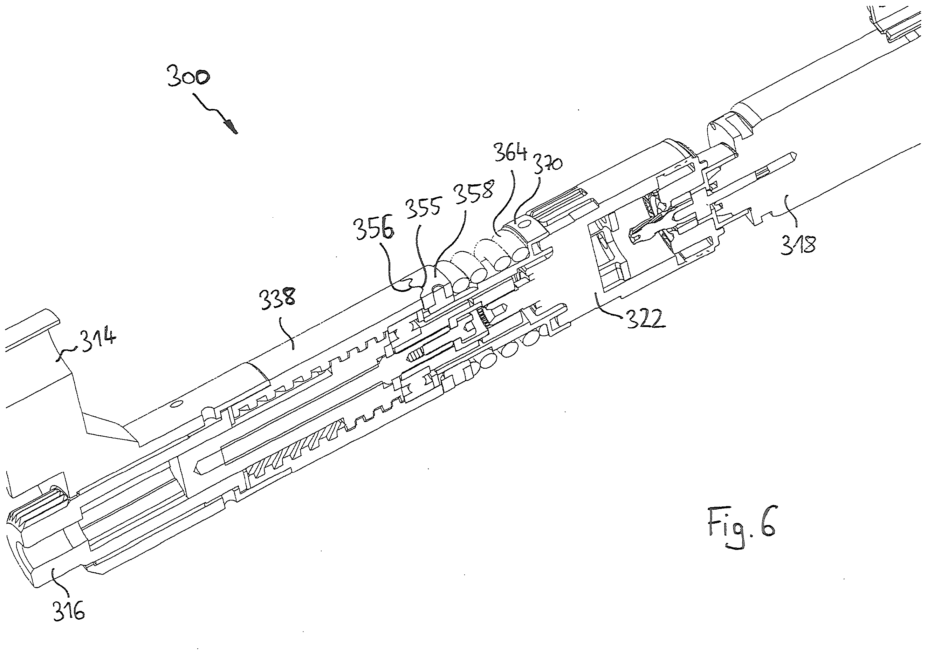

Unter Bezugnahme auf Figuren 5 und 6 wird nachfolgend ein viertes Ausführungsbeispiel der vorliegenden Erfindung erläutert. Das vierte Ausführungsbeispiel stellt eine Abwandlung des dritten Ausführungsbeispiels dar, sodass im Folgenden nur auf die Unterschiede gegenüber dem dritten Ausführungsbeispiel näher eingegangen wird und im Übrigen ausdrücklich auf die Beschreibung des dritten Ausführungsbeispiels bzw. des ersten Ausführungsbeispiels verwiesen wird.

Eine Stellanordnung 300 des vierten Ausführungsbeispiels umfasst eine Motoranordnung mit einem Motor 318 und einem Getriebe 322, welches an einer Getriebeausgangswelle 324 ein erstes Drehmoment bereitstellt. Über einen Getriebeabschnitt, welcher, so wie im ersten und im dritten Ausführungsbeispiel ein Eingangselement 326, eine Übertragungseinrichtung 332, eine Gewindehülse 338 und ein Abtriebselement 316 umfasst, wird dieses erste Drehmoment in ein zweites Drehmoment am Abtriebselement 316 umgesetzt. Auch hier kann der Getriebeabschnitt durch ein anderes Konstruktionsprinzip zur Drehmomentumsetzung verwirklicht sein.

Auch im vierten Ausführungsbeispiel weist die Stellanordnung 300 eine Überlastkupplung 350 auf. Im Gegensatz zum dritten Ausführungsbeispiel ist jedoch im vierten Ausführungsbeispiel die Getriebeausgangswelle 324 drehfest mit dem Eingangselement 326 verbunden, insbesondere sind diese Wellen betriebsfest miteinander. Im Ausführungsbeispiel ist ein Adapterelement 354 an der Getriebeausgangswelle 324 befestigt und trägt ein Verbindungselement 353, welches seinerseits mittels einer Schraube am Eingangselement 326 befestigt ist. Alternativ könnte die Getriebeausgangswelle 324 direkt an dem Eingangselement 326 befestigt sein oder die Getriebeausgangswelle 324 könnte selbst unmittelbar das Eingangselement 326 ausbilden. Das Eingangselement 326 kann gegenüber dem Gehäuse 312 oder gegenüber der Gewindehülse 338 an einem Lager 361 drehend abgestützt sein.

Ein bezüglich des Gehäuses 312 festes Trägerteil 370 trägt ein Kupplungsrad 358 an einer axialen Führung 362, so dass das Kupplungsrad 358 in axialer Richtung relativ zum Trägerteil 370 und somit relativ zum Gehäuse 312 verschiebbar jedoch drehfest gehalten ist. Das Trägerteil 370 kann entweder unmittelbar im Gehäuse 312 befestigt sein oder kann, wie im dritten Ausführungsbeispiel, am Getriebe 322 befestigt sein, so dass es für eine einfache Montage zusammen mit der Motoranordnung in das Gehäuse 312 hineingeschoben oder aus diesem entfernt werden kann.

Wie insbesondere in Figur 6 zu erkennen ist, weist das Kupplungsrad 358 an einer in axialer Richtung weisenden Stirnfläche eine Verzahnung 356 auf, welche mit einer passenden Verzahnung 355 in Eingriff bringbar ist, die an einer in axial entgegengesetzter Richtung weisenden Stirnfläche der Getriebehülse 338 vorgesehen ist. Die Zähne der Verzahnungen 355, 356 stehen von ihren jeweiligen Bauteilen 338, 358 also jeweils in axialer Richtung vor und sind einander zugewandt. Ferner ist zu erkennen, dass die Zahnflanken bzw. Kerbflanken der Verzahnungen 355, 356 abgeschrägt bzw. abgerundet sind, d.h. einen Winkel zur axialen Achse einschließen, so dass bei einer Relativdrehung zwischen Kupplungsrad 358 und Gewindehülse 338 die Schrägflächen bzw. Rundungen aneinander abgleiten und die beiden Elemente zwangsweise voneinander entfernen, bis der Zahneingriff gelöst ist. Eine Feder 364, welche sich einerseits am Trägerteil 370 und andererseits am Kupplungsrad 358 abstützt, spannt das Kupplungsrad 358 in axialer Richtung zu der Gewindehülse 338 hin, um die Verzahnungen 355, 356 miteinander im Eingriff zu halten.

Im Gegensatz zur Konstruktion des ersten und dritten Ausführungsbeispiels ist im vierten Ausführungsbeispiel die Gewindehülse 338 nicht drehfest im Gehäuse 312 befestigt, sondern kann sich gegenüber dem Gehäuse 312 drehen. Im Normalbetrieb, d.h. wenn zwischen Abtriebselement 316 und Motoranordnung 318, 322 ein externes Drehmoment anliegt, welches kleiner ist als ein vorbestimmtes Überlastdrehmoment, hält die Feder 364 das Kupplungsrad 358 im Eingriff mit der Gewindehülse 338, so dass die Gewindehülse 338 relativ zum Gehäuse 312 drehfest gehalten ist und der Betrieb der Stellanordnung 300 in analoger Weise wie im ersten Ausführungsbeispiel beschrieben erfolgen kann. Im Überlastfall, wenn zwischen Abtriebselement 316 und Motoranordnung 318, 322 ein Drehmoment wirkt, welches größer ist als das vorbestimmte Überlastdrehmoment, so wird das überhöhte Drehmoment über das Abtriebselement 316 in die Übertragungseinrichtung 332 eingegeben. Übertragungseinrichtung 332 und Eingangselement 326 sind in der in Bezug auf das erste Ausführungsbeispiel beschriebenen Weise durch die Gewindehülse 338 miteinander verbunden, so dass auch auf die Gewindehülse 338 während der Drehmomentumformung ein Drehmoment wirkt. Im Überlastungsfall ist das Drehmoment auf die Gewindehülse 338 groß genug, um die Verzahnungen 355, 356 aneinander abgleiten zu lassen und das Kupplungsrad 358 gegen die Kraft der Feder 364 in axialer Richtung zu verdrängen. Ein Lösen des Verzahnungseingriffs zwischen Kupplungsrad 358 und Gewindehülse 338 erlaubt dann der Gewindehülse 338 eine Drehung relativ zum Gehäuse 312 entsprechend der Drehung der Übertragungseinrichtung 332 und somit unabhängig von einer Drehung des Eingangselements 326. Die Drehmomentübertragung zwischen Abtriebselement 316 und Motoranordnung 318, 322 ist somit an dieser Stelle aufgehoben und eine Einleitung eines überhöhten Drehmoments in die Motoranordnung 318, 322 kann verhindert werden. Wenn der Überlastzustand nicht mehr vorhanden ist, so rückt die Feder 364 das Kupplungsrad 358 wieder in den Zahneingriff mit der Gewindehülse 338, so dass letztere wieder drehfest im Gehäuse gehalten ist und der Normalbetrieb wieder möglich ist.

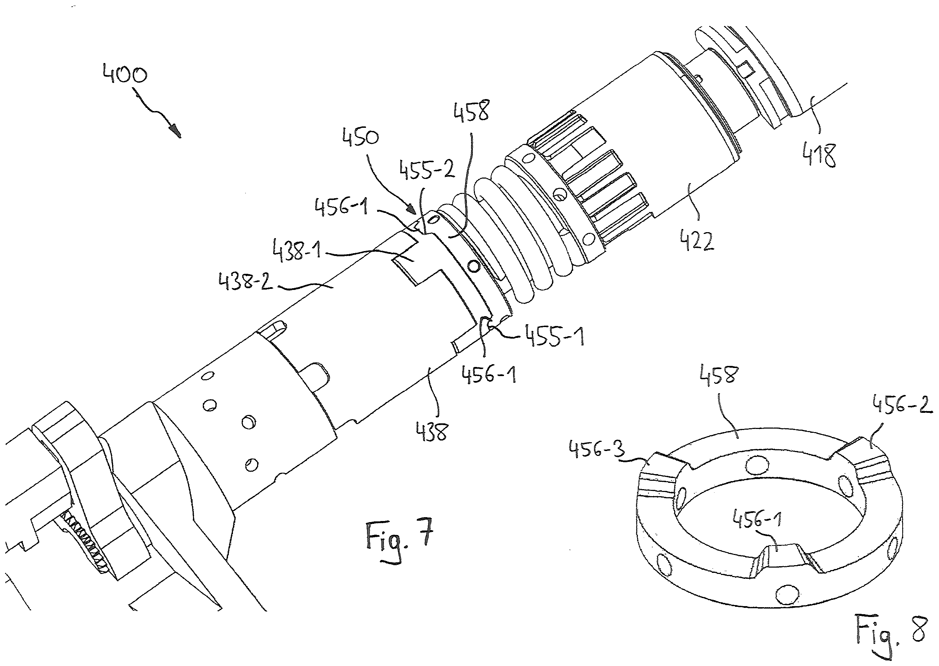

Unter Bezugnahme auf die Figuren 7 und 8 wird nachfolgend ein fünftes Ausführungsbeispiel der Erfindung erläutert. Das fünfte Ausführungsbeispiel ist eine Abwandlung des vierten Ausführungsbeispiels, so dass nachfolgend nur auf die Unterschiede zum vierten Ausführungsbeispiel näher eingegangen wird und in Bezug auf die Konstruktion und Funktion aller übrigen Komponenten ausdrücklich auf die vorstehende Beschreibung des vierten Ausführungsbeispiels, ggf. in Verbindung mit der Beschreibung des ersten und des dritten Ausführungsbeispiels verwiesen wird.

Im fünften Ausführungsbeispiel weist die Überlastkupplung 450 im Wesentlichen einen identischen Aufbau auf wie im dritten Ausführungsbeispiel, wobei jedoch ein Unterschied in der Form der Verzahnungen 455 und 456 des Kupplungsrads 458 bzw. der Gewindehülse 438 besteht. Wie in Figur 7 und 8 gut zu erkennen ist, weist das Kupplungsrad nur drei Vorsprünge oder Zähne 456-1, 456-2 und 456-3 auf, welche im Winkel von 120° zueinander versetzt angeordnet sind. Korrespondierend dazu sind an der Stirnseite der Gewindehülse 438 drei Kerben 455-1, 455-2 und 455-3 im Winkel von 120° zueinander versetzt angeordnet. Kupplungsrad 458 und Gewindehülse 438 können somit nur in drei unterschiedlichen Drehstellungen miteinander in Eingriff gebracht werden.

Eine besondere Wirkung erzielt die Stellanordnung 400 des fünften Ausführungsbeispiels im Falle einer Anwendung, bei welcher das Abtriebselement 416 einen regulären Betriebswinkel aufweist, der kleiner ist als 120°. Ein häufiger Anwendungsfall ist beispielsweise eine Klappenbetätigungsanordnung, in welcher eine an dem Abtriebselement 416 befestigte Klappe in einem Schwenkwinkel zwischen Öffnungsstellung und Schließstellung zu verschwenken ist, der kleiner ist als 120°, beispielsweise ungefähr 90° beträgt. In einer solchen Anwendung hat die Überlastkupplung 450 die folgende Wirkung. Kommt es während der Bewegung des Abtriebselements 416 innerhalb des Betriebswinkels zu einer Blockierung des Abtriebselements 416 oder einer anderweitigen überhöhten Beanspruchung des Abtriebselements 416, so wird die Drehmomentübertragung im Bereich der Überlastkupplung 450 getrennt und somit wird eine Rotation des Eingangselements 426 über die Linearverschiebung der Übertragungseinrichtung 432 in eine Rotation der Gewindehülse 438 umgesetzt. Der Drehwinkel der Gewindehülse 438 entspricht dann demjenigen Drehwinkel, den das Abtriebselement 416 drehen würde, wenn es denn nicht blockiert wäre. In einem Anwendungsfall, in welchem der Betriebswinkel des Abtriebselements 416 kleiner als 120° ist und somit auch die Motoranordnung dafür eingerichtet sein kann, sich in beiden Richtungen nur so lange zu drehen, bis dieser Betriebswinkel überstrichen ist, endet dann die Drehung des Motors und damit die Drehung der Gewindehülse 438 noch bevor die Verzahnung 456 des Kupplungsrads 458 in einer nächsten Verzahnung 455 der Gewindehülse 438 einrastet. Das bedeutet, dass in einem solchen Störungsfall nach dem Abschalten des Motors das Abtriebselement 416 beispielsweise manuell nachgeführt werden kann, bis es den Endpunkt des normalen Betriebswinkels erreicht, und dass dann jeder Zahn des Kupplungsrads 458 in genau dieselbe zugehörige Kerbe der Gewindehülse 438 wieder einrückt, in der der Zahn auch beim Normalbetrieb der Stellanordnung 400 bis zum Auftreten des Überlastfalls eingegriffen hatte. Das bedeutet zwangsläufig, dass insbesondere die Übertragungseinrichtung in Bezug auf die Längsachse sich genau an der Position befindet, an der sie stehen würde, wenn der Überlastfall nicht eingetreten wäre, sondern die Stellanordnung 400 im Normalbetrieb bis zu der jeweiligen Endposition gefahren wäre. Auf diese Weise kann sichergestellt werden, dass die Stellanordnung 400 nach Beseitigung eines Überlastfalls in einfacher Weise wieder in eine betriebsbereite Stellung zurückgestellt werden kann.

Der oben genannte Effekt des fünften Ausführungsbeispiels lässt sich natürlich ebenso erzielen, wenn das Kupplungsrad 458 statt der Zähne 456-1, 456-2, 456-3 drei entsprechende Kerben oder Vertiefungen aufweist und die hierzu passenden Zähne stattdessen an der Gewindehülse 438 vorgesehen wären. Ferner können statt drei Zähnen bzw. Vertiefungen am Kupplungsrad 458 sowie an der Gewindehülse 438 jeweils mehr Zähne und Vertiefungen oder nur zwei Zähne und Vertiefungen oder sogar nur ein Zahn und eine zugeordnete Vertiefung vorgesehen sein. Entscheidend für den oben genannten Effekt ist, dass ein Zwischenwinkel zwischen benachbarten Rastpositionen (rastende Drehstellungen) von Kupplungsrad 458 und Gewindehülse 438 größer ist als ein Betriebswinkel des Abtriebselements 416, beispielsweise ein maximaler Schwenkwinkel einer Klappe im Falle einer Klappensteuervorrichtung.

Anzumerken ist schließlich, dass im fünften Ausführungsbeispiel die Gewindehülse 438 zweiteilig ausgebildet sein kann, nämlich einen ersten Abschnitt 438-1 aufweisen kann, welcher die Verzahnung 455 trägt, und einen zweiten Abschnitt 438-2 aufweisen kann, wobei der erste Abschnitt 438-1 und der zweite Abschnitt 438-2 fest miteinander verbunden sind. Alternativ könnte die Gewindehülse 438, so wie im dritten Ausführungsbeispiel, einteilig ausgebildet sein.

## Patentansprüche

1. Stellanordnung (300; 400), umfassend
a. ein rotierendes Eingangselement (326), an welchem ein erstes Drehmoment einer Motoranordnung (318, 322) in die Stellanordnung eingebbar ist,
b. ein rotierendes Ausgangselement (316; 416), an welchem ein zweites Drehmoment von der Stellanordnung ausgebbar ist,
c. einen Getriebeabschnitt zur Umformung des ersten Drehmoments in das zweite Drehmoment,
wobei der Getriebeabschnitt eine Übertragungseinrichtung mit einem ersten Gewindeabschnitt und einem zweiten Gewindeabschnitt umfasst,
wobei der erste Gewindeabschnitt eine Drehung des Eingangselements in eine axiale Bewegung der Übertragungseinrichtung umsetzt und der zweite Gewindeabschnitt eine axiale Bewegung der Übertragungseinrichtung in eine Drehung des Ausgangselements umsetzt, und
wobei der erste Gewindeabschnitt und der zweite Gewindeabschnitt voneinander unterschiedliche Gewindesteigungen aufweisen,
**dadurch gekennzeichnet, dass** die Übertragungseinrichtung (332) mit dem Ausgangselement (316; 416) axial relativ zueinander verschiebbar jedoch drehfest verbunden ist.

2. Stellanordnung (300; 400) nach Anspruch 1, **dadurch gekennzeichnet, dass** die Übertragungseinrichtung (323) eine Spindelmutter umfasst und dass der erste Gewindeabschnitt und der zweite Gewindeabschnitt an unterschiedlichen Abschnitten der Spindelmutter ausgebildet sind, wobei vorzugsweise einer der beiden Gewindeabschnitte ein Innengewinde der Spindelmutter bildet und der andere Gewindeabschnitt ein Außengewinde der Spindelmutter bildet.

3. Stellanordnung (300; 400) nach Anspruch 1 oder Anspruch 2, **dadurch gekennzeichnet, dass** die Stellanordnung eine Hauptachse (A) aufweist, um welche das Eingangselement (326) sowie das Ausgangselement (316; 416) rotieren und entlang welcher die Übertragungseinrichtung (332) axial verschiebbar ist.

4. Stellanordnung (300; 400) nach einem der vorhergehenden Ansprüche, **dadurch gekennzeichnet, dass** das Eingangselement (326) mit dem ersten Gewindeabschnitt der Übertragungseinrichtung (332) in Gewindeeingriff steht oder/und dass das Ausgangselement mit dem zweiten Gewindeabschnitt der Übertragungseinrichtung in Gewindeeingriff steht.

5. Stellanordnung (300; 400) nach einem der vorhergehenden Ansprüche, **dadurch gekennzeichnet, dass** die Übertragungseinrichtung (332) mit dem Eingangselement oder mit einem gehäusefesten Abschnitt axial verschiebbar jedoch drehfest verbunden ist.

6. Stellanordnung (300; 400) nach einem der vorhergehenden Ansprüche, ferner **gekennzeichnet durch** eine Motoranordnung (318, 322), durch welche das Eingangselement drehend angetrieben ist.

7. Stellanordnung (300; 400) nach Anspruch 6, **dadurch gekennzeichnet, dass** die Motoranordnung einen Motor (318) und ein Getriebe (322), vorzugsweise ein Planetenradgetriebe, umfasst, wobei ein Ausgangsdrehmoment des Motors in das Getriebe eingegeben wird und ein Ausgangsdrehmoment des Getriebes das Eingangselement antreibt.

8. Klappensteuervorrichtung zur Steuerung der Bewegung einer Klappe relativ zu einem Basisabschnitt in einem vorbestimmten Schwenkwinkel, vorzugsweise einem Winkel <= 180 Grad,
wobei die Klappensteuervorrichtung eine Klappenhalterung, an welcher eine Klappe vorgesehen oder montierbar ist, und eine Stellanordnung (300; 400) nach einem der vorhergehenden Ansprüche umfasst,
wobei die Klappenhalterung an dem Ausgangselement (316; 416) angeordnet ist, wobei die Stellanordnung ein Gehäuse (312; 412) aufweist, in welchem die Übertragungseinrichtung, das Eingangselement und eine Motoranordnung zum drehenden Antrieb des Eingangselements untergebracht sind, und
wobei das Gehäuse Halterungsmittel zur betriebsfesten Halterung des Gehäuses an dem Basisabschnitt aufweist.

9. Klappensteuervorrichtung nach Anspruch 8, **dadurch gekennzeichnet, dass** der Schwenkwinkel der Klappe auf Werte innerhalb eines vorbestimmten Betriebswinkels beschränkt ist, wobei das Kupplungselement (458) eine Verzahnung (456) aufweist, welche in eine zugeordnete Gegenverzahnung (455) der Stellanordnung eingreifen kann, um eine Relativdrehung zwischen Kupplungselement und Gegenverzahnung zu blockieren, wobei in Drehrichtung des Kupplungselements zwei benachbarte Eingriffsstellungen zwischen Verzahnung (456) und Gegenverzahnung (455) einen Winkel einschließen, der größer ist als der Betriebswinkel.

## Claims

1. Actuating arrangement (300; 400), comprising
a. a rotating input element (326) at which a first torque of a motor arrangement (318, 322) can be input into the actuating arrangement,
b. a rotating output element (316; 416) at which a second torque can be output from the actuating arrangement,
c. a transmission portion for transforming the first torque into the second torque,
wherein the transmission portion comprises a transmission apparatus with a first thread portion and a second thread portion,
wherein the first thread portion converts a rotation of the input element into an axial movement of the transmission apparatus and the second thread portion converts an axial movement of the transmission apparatus into a rotation of the output element, and
wherein the first thread portion and the second thread portion have thread pitches which are different from one another,
**characterised in that** the transmission apparatus (332) is connected to the output element (316; 416) axially displaceably relative to one another, but rotationally conjointly.

2. Actuating arrangement (300; 400) according to Claim 1, **characterised in that** the transmission apparatus (323) comprises a spindle nut and that the first thread portion and the second thread portion are formed on different portions of the spindle nut, wherein preferably one of the two thread portions forms an internal thread of the spindle nut and the other thread portion forms an external thread of the spindle nut.

3. Actuating arrangement (300; 400) according to Claim 1 or Claim 2, **characterised in that** the actuating arrangement has a main axis (A) around which the input element (326) and the output element (316; 416) rotate and along which the transmission apparatus (332) is axially displaceable.

4. Actuating arrangement (300; 400) according to any one of the preceding claims, **characterised in that** the input element (326) is in threaded engagement with the first thread portion of the transmission apparatus (332) or/and that the output element is in threaded engagement with the second thread portion of the transmission apparatus.

5. Actuating arrangement (300; 400) according to any one of the preceding claims, **characterised in that** the transmission apparatus (332) is connected to the input element or to a portion fixed on the housing in an axially displaceable, but rotationally conjoint manner.

6. Actuating arrangement (300; 400) according to any one of the preceding claims, further **characterised by** a motor arrangement (318, 322) by which the input element is rotationally driven.

7. Actuating arrangement (300; 400) according to Claim 6, **characterised in that** the motor arrangement comprises a motor (318) and a transmission (322), preferably a planetary gearbox, wherein an output torque of the motor is input into the transmission and an output torque of the transmission drives the input element.

8. Flap control device for controlling the movement of a flap relative to a base portion at a predetermined pivot angle, preferably an angle <= 180 degrees,
wherein the flap control device comprises a flap holder on which a flap is provided or can be mounted and an actuating arrangement (300; 400) according to any one of the preceding claims,
wherein the flap holder is arranged on the output element (316; 416), wherein the actuating arrangement has a housing (312; 412) in which the transmission apparatus, the input element and a motor arrangement for rotational driving of the input element are accommodated, and
wherein the housing has holder means for operationally fixed retention of the housing on the base portion.

9. Flap control device according to Claim 8, **characterised in that** the pivot angle of the flap is restricted to values within a predetermined operating angle, wherein the coupling element (458) has a toothing (456) which can engage in an associated mating toothing (455) of the actuating arrangement, in order to block a relative rotation between coupling element and mating toothing, wherein two adjacent engagement positions between toothing (456) and mating toothing (455) enclose, in the direction of rotation of the coupling element, an angle which is greater than the operating angle.

## Revendications

1. Ensemble de réglage (300 ; 400), comprenant
a. un élément d'entrée (326) en rotation, au niveau duquel un premier couple de rotation d'un ensemble moteur (318, 322) peut être introduit dans l'ensemble de réglage,
b. un élément de sortie (316 ; 416) en rotation, au niveau duquel un deuxième couple de rotation peut être délivré par l'ensemble de réglage,
c. une portion de transmission pour convertir le premier couple de rotation en le deuxième couple de rotation,
la portion de transmission comprenant un dispositif de transmission ayant une première partie à filet et une deuxième partie à filet,
dans lequel
la première partie à filet convertit une rotation de l'élément d'entrée en un mouvement axial du dispositif de transmission, et la deuxième partie à filet convertit un mouvement axial du dispositif de transmission en une rotation de l'élément de sortie, et
la première partie à filet et la deuxième partie à filet présentent des pas de vis différents l'un de l'autre,
**caractérisé en ce que** le dispositif de transmission (332) est relié à l'élément de sortie (316 ; 416) de manière mobile en translation axiale l'un par rapport à l'autre, mais solidairement en rotation.

2. Ensemble de réglage (300 ; 400) selon la revendication 1,
**caractérisé en ce que** le dispositif de transmission (323) comprend un écrou de broche, et
**en ce que** la première partie à filet et la deuxième partie à filet sont formées sur des parties différentes de l'écrou de broche, de préférence, l'une des deux parties à filet formant un taraudage de l'écrou de broche et l'autre partie à filet formant un filetage de l'écrou de broche.

3. Ensemble de réglage (300 ; 400) selon la revendication 1 ou la revendication 2,
**caractérisé en ce que** l'ensemble de réglage présente un axe principal (A) autour duquel l'élément d'entrée (326) ainsi que l'élément de sortie (316 ; 416) tournent et le long duquel le dispositif de transmission (332) est mobile en translation axiale.

4. Ensemble de réglage (300 ; 400) selon l'une des revendications précédentes,
**caractérisé en ce que** l'élément d'entrée (326) est en prise avec la première partie à filet du dispositif de transmission (332), ou/et
**en ce que** l'élément de sortie est en prise avec la deuxième partie à filet du dispositif de transmission.

5. Ensemble de réglage (300 ; 400) selon l'une des revendications précédentes,
**caractérisé en ce que** le dispositif de transmission (332) est relié à l'élément d'entrée ou à une portion solidaire du boîtier, de manière mobile en translation axiale, mais solidairement en rotation.

6. Ensemble de réglage (300 ; 400) selon l'une des revendications précédentes,
**caractérisé en outre par** un ensemble moteur (318, 322) par lequel l'élément d'entrée est entraîné en rotation.

7. Ensemble de réglage (300 ; 400) selon la revendication 6,
**caractérisé en ce que** l'ensemble moteur comprend un moteur (318) et un réducteur (322), de préférence un train épicycloïdal, dans lequel un couple de sortie du moteur est introduit dans le réducteur et un couple de sortie du réducteur entraîne l'élément d'entrée.

8. Dispositif de commande de volet pour commander le mouvement d'un volet par rapport à une portion de base selon un angle de pivotement prédéterminé, de préférence un angle <= 180 degrés,
le dispositif de commande de volet comprenant un support de volet sur lequel un volet est prévu ou peut être monté, et un ensemble de réglage (300 ; 400) selon l'une des revendications précédentes,
dans lequel
le support de volet est disposé sur l'élément de sortie (316 ; 416),
l'ensemble de réglage comprend un boîtier (312 ; 412) dans lequel sont logés le dispositif de transmission, l'élément d'entrée et un ensemble moteur destiné à entraîner en rotation l'élément d'entrée, et
le boîtier comprend des moyens de support pour supporter de manière opérationnellement fixe le boîtier sur la portion de base.

9. Dispositif de commande de volet selon la revendication 8,
**caractérisé en ce que** l'angle de pivotement du volet est limité à des valeurs comprises dans un angle de fonctionnement prédéterminé, l'élément d'embrayage (458) présentant une denture (456) qui peut s'engrener dans une contre-denture (455) associée de l'ensemble de réglage, afin de bloquer une rotation relative entre l'élément d'embrayage et la contre-denture, et deux positions d'engrènement voisines entre la denture (456) et la contre-denture (455) formant, dans le sens de rotation de l'élément d'embrayage, un angle supérieur à l'angle de fonctionnement.
